# EUROPÄISCHE PATENTANMELDUNG

(11) **EP 4 678 376 A1**
(43) Veröffentlichungstag der Anmeldung: **14.01.2026**
(21) Anmeldenummer: 25197042.2
(22) Anmeldetag: 20.08.2025
(51) Int. Cl.: B29C 48/92, B29C 48/885, B29C 48/10, B29C 48/88

(54) **VERFAHREN ZUM ERFASSEN EINER STABILITÄT EINER FOLIENBLASE UND BLASFOLIENEXTRUSIONSANLAGE**

(71) Anmelder: Kdesign GmbH, 53639 Königswinter (DE)
(72) Erfinder: ZIMMERMANN, Richard, 53639 Königswinter (DE); LAMERS, Daniel, 53639 Königswinter (DE)
(74) Vertreter: Neumann Müller Oberwalleney Patentanwälte PartG mbB

(57) **Zusammenfassung**

Verfahren zum Erfassen einer Stabilität einer Folienblase (8) bei der Herstellung eines Folienschlauchs mittels einer Blasfolienextrusionsanlage (1) mit den folgenden Verfahrensschritten:
- Extrudieren eines innendruckbeaufschlagten Folienschlauchs zu einer Folienblase (8) aus einem thermoplastischen Kunststoff mittels einer Ringdüse (11) eines Blaskopfes (6),
- Abziehen der Folienblase (8) in einer Produktionsrichtung (P), und
- Kühlen der Folienblase (8) mittels eines die Folienblase (8) mit Kühlgas anströmenden und die Folienblase (8) umgebenden Kühlgasrings (12),
**dadurch gekennzeichnet,**
dass zumindest ein die Stabilität der Folienblase (8) repräsentierender Parameter innerhalb eines vom Kühlgasring (12) geführten Bereichs der Folienblase (8) ermittelt wird,
wobei der zumindest eine die Stabilität der Folienblase (8) repräsentierende Parameter aus Messwerten einer Schwingungsfrequenz und/oder einer Schwingungsamplitude der Folienblase (8) ermittelt wird.

## Beschreibung

Die Erfindung betrifft ein Verfahren zum Erfassen einer Stabilität einer Folienblase bei der Herstellung eines Folienschlauchs mittels einer Blasfolienextrusionsanlage mit den folgenden Verfahrensschritten:
- Extrudieren eines innendruckbeaufschlagten Folienschlauchs zu einer Folienblase aus einem thermoplastischen Kunststoff mittels einer Ringdüse eines Blaskopfes,
- Abziehen der Folienblase in einer Produktionsrichtung, und
- Kühlen der Folienblase mittels eines die Folienblase mit Kühlgas anströmenden und die Folienblase umgebenden Kühlgasrings.

Die Erfindung betrifft ferner eine Blasfolienextrusionsanlage für die Herstellung eines Folienschlauchs nach einem solchen Verfahren umfassend:
- einen Blaskopf mit einer Ringdüse zum Extrudieren eines innendruckbeaufschlagten Folienschlauchs zu einer Folienblase aus einem thermoplastischen Kunststoff,
- eine Abzugseinheit zum Abziehen der Folienblase in einer Produktionsrichtung, und
- einen die Folienblase mit Kühlgas anströmenden und die Folienblase umgebenden Kühlgasring zum Kühlen der Folienblase.

Ein solches Verfahren und eine solche Blasfolienextrusionsanlage sind aus der DE 10 2016 119 872 A1 bekannt. Bei einem üblichen Herstellungsprozess wird Kunststoffschmelze aus der Ringdüse eines Extrusionswerkzeugs der Blasfolienextrusionsanlage extrudiert und in einer Abzugsrichtung abgezogen. Der heiße Folienschlauch wird unmittelbar nach dem Austritt aus der Ringdüse am äußeren und häufig auch am inneren Umfang mit Kühlgas, in der Regel mit Kühlluft, aus einem Kühlgasring bzw. einer Innenkühleinrichtung angeblasen und abgekühlt. Der Folienschlauch wird in Abzugsrichtung über eine Kalibriervorrichtung und eine Flachlegeeinrichtung geführt und in einer Abzugseinheit als Flachschlauch von Förderwalzen abgequetscht und abgezogen. Das sogenannte Einfrieren des Folienschlauchs erfolgt dicht unterhalb der Kalibriervorrichtung im Bereich der sogenannten Einfriergrenze und bedeutet, dass der Folienschlauch nicht weiter plastisch verformbar, insbesondere streckbar, ist. Die Foliendimension in Querrichtung und damit die spätere Schlauchbreite ist veränderbar und wird über die durchmesserverstellbare Kalibriervorrichtung in Verbindung mit dem Innenüberdruck der Schlauchfolie bestimmt. Wichtige Qualitätsparameter sind dabei das Dickenumfangsprofil des Folienschlauchs und das Dickenprofil in Produktionsrichtung der Anlage.

Störungen in der Stabilität des Folienschlauchs in der Schlauchbildungszone, also in dem Bereich zwischen der Ringdüse und der Einfriergrenze, in dem der Folienschlauch zu einer Folienblase aufgeblasen, gekühlt und gestreckt wird, und Störungen in der Lagestabilität der Einfriergrenze stellen sich zum einen als periodische Instabilitäten (sog. "Pumpen" oder "Flattern") dar. Diese dynamischen Instabilitäten entstehen zum Beispiel durch eine nicht zu Anlagendurchsatz oder Rohstoffmischung passende Luftmengeneinstellung des Kühlgases, oder eine nicht zu Anlagendurchsatz oder Rohstoffmischung oder Kühlluftmenge passende Einstellung des verstellbaren äußeren Kühlgasrings oder eine nicht zum Anlagendurchsatz passende vertikale Einstellung der höhenverfahrbaren Kalibriervorrichtung. Die genannten dynamischen Instabilitäten in der Schlauchbildungszone können auch zu vertikalen Schwankungen der Lage der Einfriergrenze führen. Weiter gibt es auch ein langsames Abdriften der Einfriergrenze durch Änderung von Produktionsbedingungen, z.B. tageszeitabhängige Temperaturschwankungen von Umgebungsluft und Kühlgas in der Außenkühlung und Innenkühlung. Dieses langsame Abdriften führt erst nach Überschreiten eines kritischen Punktes zu Instabilitäten in der Schlauchbildungszone.

Die Festlegung einer stabilen Lage der Einfriergrenze und einer ausreichenden Formstabilität des Folienschlauchs in der Schlauchbildungszone nach dem Anfahren der Blasfolienextrusionsanlage oder nach Produktumstellungen durch Einstellung der beeinflussenden Stellgrößen, insbesondere von Stellgrößen des Kühlgasrings, erfolgt bis heute manuell durch den Bediener, wobei dieser optisch und anhand seiner Erfahrung die Lage der Einfriergrenze und die Stabilität der Folienblase in der Schlauchbildungszone beurteilt.

Die vorher beschriebenen Instabilitäten der Folienblase in der Schlauchbildungszone wie Flattern oder Pumpen, im Wesentlichen hervorgerufen durch Einstellungen am Kühlgasring, haben gravierende Auswirkungen auf die Produktqualität. Es kann zu Anschlagmarkierungen durch Bauteilkontakt im Kühlgasring, zu Breitenschwankungen der eingefrorenen Folienbahn, zu Schwankungen der mittleren Dicke in Produktionsrichtung und zu starker Verschlechterung des Dickenquerprofils kommen. Neben unerwünschtem Produktionsausschuss führt dies im schlimmsten Fall zu kompletten Produktionsabrissen.

Es ist daher für den Produktionsprozess von hoher Wichtigkeit, die Stabilität der Folienblase in der Schlauchbildungszone zwischen Ringdüse und Einfriergrenze sowie alle damit bei gegebenem Produkt in Zusammenhang stehenden Einstellparameter ständig zu überprüfen. Dies ist heute allein von der Qualifikation des Bedienpersonals abhängig und kann nicht permanent erfolgen, so dass es regelmäßig zu Produktionsstörungen mit verschlechterter Produktqualität oder sogar zur Produktionsunterbrechung kommt. Da in der Schlauchfolienextrusion überwiegend Rollensätze mit einer Laufzeit von mehreren Stunden produziert werden, die später auf anderen Maschinen weiterverarbeitet werden, kann bereits das kurzzeitige Auftreten einer Blaseninstabilität die ganze Rolle unbrauchbar machen.

Typische Einstellungen an nach dem Stand der Technik bekannten Kühlgasringen sind Verstellungen der die Austritts-Luftkanäle (Kühlgasringdüsen) bildenden Lippenbauteile zur Anpassung der jeweiligen Austrittsgeschwindigkeit des Kühlgases bzw. zur Änderung der Mengenaufteilung bei Vorhandensein mehrerer Kühlgasringdüsen. Diese Einstellungen erfolgen üblicherweise manuell über Stellgewinde an den Bauteilen. Die Änderung der jeweiligen Austrittsgeschwindigkeit des Kühlgases und/oder die Mengenaufteilung zwischen den Austrittsluftkanälen (Kühlgasringdüsen) verändert das Abkühlverhalten des Folienschlauchs im Bereich des Kühlgasrings und auch stromab bis zur Einfriergrenze. Zu den Einstellungen am Kühlgasring gehört auch die gesamte zugeführte Kühlgasmenge. Diese Einstellung erfolgt üblicherweise über Anpassung der Gebläsedrehzahl, kann aber auch über eine Drosselklappe erfolgen.

In Produktionsrichtung nach den eigentlichen Austrittsluftkanälen (Kühlgasringdüsen) verfügen die meisten Bauformen über einen oder mehrere sog. Venturiaufsätze, welche aufgrund von Strömungseffekten (Bernoulli/Venturi/Coanda) den Folienschlauch ansaugen und die Geschwindigkeit, die Turbulenz und den Kühleffekt der Luftströmung zwischen Bauteil und Folienschlauch erhöhen. Die Stärke der Ansaugung wird über die Einstellung der Höhe dieser Aufsätze sowie teilweise zusätzlich durch verstellbare Lochblenden für Bypass-Luftströme justiert. Dabei verändert sich das Abkühlverhalten des Folienschlauchs im Bereich des Kühlgasrings und auch stromab bis zur Einfriergrenze.

Bei Hochleistungs-Kühlgasringen ist es außerdem üblich, den Kühlgasring beabstandet zur Ringdüse zu platzieren und mit einer Einrichtung zur Höhenverstellung des gesamten Kühlgasrings auszustatten, da eine produktabhängige Einstellung des Abstandes zur Ringdüse notwendig ist. Die Ringdüse kann auch als Extrusionsdüse bezeichnet werden.

Alle vorgenannten Einstellungen spielen zusammen und interagieren teilweise, sodass es einen erfahrenen Bediener erfordert, um eine optimale Formstabilität des Folienschlauchs in der Schlauchbildungszone zu erreichen.

So ist es beispielsweise auch möglich, bei ansonsten gleichbleibenden Parametern allein durch eine ungünstige Verstellung am Kühlgasring Instabilitäten in der Schlauchbildungszone einzuleiten.

In der DE 10 2016 119 872 A1 wurde vorgeschlagen, die Formstabilität der Folienblase automatisch zu regeln. Hierzu wurde ein die Formstabilität des Folienschlauchs in der Schlauchbildungszone repräsentierenden Parameters des Folienschlauchs ermittelt, wobei der die Formstabilität des Folienschlauchs repräsentierende Parameter mittels einer Regeleinrichtung durch Verstellen der zumindest einen Stellgröße des Kühlgasrings auf einen Sollwert oder einen Sollwertbereich geregelt wurde.

In der WO 2023/156535 A1 und in der DE 10 2018 127 264 A1 sind Vorrichtungen zum Erzeugen eines Folienschlauchs beschrieben, bei denen der Folienblase in einem Beobachtungsbereich zwischen der Ringdüse und dem Kühlgasring oder der Einfriergrenze beobachtet wird, um optisch einen Konturparameter einer Folienkontur der Folienblase zu erkennen.

Es hat sich jedoch gezeigt, dass die Ermittlung des die Stabilität der Folienblase in der Schlauchbildungszone repräsentierenden Parameters je nach Position der Messungen zu erheblichen Unterschieden führen kann.

Es ist daher Aufgabe der vorliegenden Erfindung, ein Verfahren und eine Blasfolienextrusionsanlage bereitzustellen, bei denen ein genauerer die Stabilität der Folienblase repräsentierende Parameter der Folienblase ermittelt werden kann.

Die Aufgabe wird durch ein Verfahren zum Erfassen einer Stabilität einer Folienblase bei der Herstellung eines Folienschlauchs mittels einer Blasfolienextrusionsanlage mit den folgenden Verfahrensschritten gelöst:
- Extrudieren eines innendruckbeaufschlagten Folienschlauchs zu einer Folienblase aus einem thermoplastischen Kunststoff mittels einer Ringdüse eines Blaskopfes,
- Abziehen der Folienblase in einer Produktionsrichtung, und
- Kühlen der Folienblase mittels eines die Folienblase mit Kühlgas anströmenden und die Folienblase umgebenden Kühlgasrings,

wobei zumindest ein die Stabilität der Folienblase repräsentierender Parameter innerhalb eines vom Kühlgasring geführten Bereichs der Folienblase ermittelt wird, und
wobei der zumindest eine die Stabilität der Folienblase repräsentierende Parameter aus Messwerten einer Schwingungsfrequenz und/oder einer Schwingungsamplitude der Folienblase ermittelt wird.

Wie bereits oben erläutert, wird die Folienblase in der Schlauchbildungszone, in der das Kunststoffmaterial der Folienblase noch plastifiziert ist, durch den Kühlgasring angesaugt und somit unter anderem stabilisiert. Der vom Kühlgasring geführte Bereich der Folienblase kann daher dadurch definiert werden, dass in diesem Bereich die Folienblase vom Kühlgasring angesaugt wird. Hierbei gelten eventuell vorhandene Venturiaufsätze und Lochblenden als Bestandteil des Kühlgasrings, da sie vergleichbare Funktionen erfüllen wie die Kühllippen, nämlich unter anderem Führen, Ansaugen und Formen der Folienblase sowie Führen des Kühlgases.

Es hat sich gezeigt, dass im vom Kühlgasring geführten Bereich Instabilitäten der Folienblase auch außerhalb des geführten Bereichs besonders frühzeitig erkannt werden können, teilweise sogar vor ihrer Ausprägung außerhalb des geführten Bereichs. Besonders günstig ist eine Ermittlung des die Stabilität der Folienblase repräsentierenden Parameters innerhalb des Erstreckungsbereiches des Kühlgasrings sowie in einem Bereich bis maximal 200 mm oder bis maximal 50 mm stromab des Kühlgasrings, jeweils in Produktionsrichtung betrachtet.

Innerhalb des Kühlgasrings ist die Schmelze der Folienblase durch Venturi- und Coanda-Effekt fixiert. Dies gilt auch noch für den Bereich unmittelbar nach dem Austritt aus dem Kühlgasring (bis maximal 200 mm stromab des Kühlgasrings, insbesondere bis maximal 50 mm). Instabilitäten in diesem Bereich zeigen sich durch eine viel höhere Frequenz als in Bereichen außerhalb des vom Kühlgasrings geführten Bereichs, und deuten klarer auf eine Fehleinstellung der Blasfolienextrusionsanlage hin, insbesondere des Kühlgasrings, des zugeführten Kühlgasvolumenstroms und der Kühlgastemperatur, als außerhalb dieses Bereichs.

Es hat sich zudem gezeigt, dass der die Stabilität der Folienblase repräsentierende Parameter insbesondere die Schwingungsfrequenz und/oder die Schwingungsamplitude der Folienblase in einem Frequenzspektrum von über 1 Hz oder über 5 Hz oder über 10 Hz oder 1 bis 50 Hz oder 5 bis 50 Hz oder 10 bis 50 Hz oder 10 bis 20 Hz ist. Insbesondere die Analyse hochfrequenter Schwingungen im Bereich ab 10 Hz führt zu einem besonders genauen die Stabilität der Folienblase repräsentierenden Parameter. Diese hochfrequenten Schwingungen treten typischerweise im vom Kühlgasring geführten Bereich auf.

Der zumindest eine die Stabilität der Folienblase repräsentierende Parameter kann mittels mindestens eines Abstandssensors ermittelt werden, indem der zeitlich veränderliche Abstand zwischen dem Abstandssensor und der Folienblase gemessen wird.

Bei dem Abstandssensor kann es sich um einen Laser-Triangulations-Sensor oder einen LiDAR-Sensor handeln.

Laser-Triangulations-Sensoren arbeiten nach dem Prinzip der Triangulation, um Entfernungen präzise zu messen. Dabei sendet eine Laserquelle einen Laserstrahl auf die zu vermessende Oberfläche. Das reflektierte Licht wird von einem Empfänger detektiert. Aus der Position des Lichtpunkts auf dem Empfänger und dem bekannten Winkel zwischen Laserquelle und Empfänger lässt sich die Entfernung zum zur Oberfläche berechnen.

LiDAR-Sensor (Abkürzung für englisch: Light Detection and Ranging) ermitteln die Entfernung zu einer Oberfläche mittels Laufzeitverfahren (englisch: Time of Flight). Beim Prinzip der Laufzeitmessung erzeugt eine Laserdiode des LiDAR-Sensors kurze Laserimpulse, die auf die Oberfläche projiziert werden. Das von der Oberfläche reflektierte Licht wird von einem Sensorelement aufgenommen. Über die Laufzeit der Laserimpulse zur Oberfläche und zurück wird die Entfernung abgeleitet.

Laser-Sensoren haben den Vorteil, dass sie hohe Abtastraten aufweisen und daher hochfrequente Schwingungen der Oberfläche der Folienblase erfassen können, sogar in Frequenzbereichen, die mit üblicherweise in Blasfolienanlagen eingesetzten Ultraschallsensoren nicht erfasst werden können.

Alternative oder zusätzlich können auch eine oder mehrere Hochgeschwindigkeitskameras eingesetzt werden.

Die Abtastrate zum Messen der Schwingungsfrequenz und/oder der Schwingungsamplitude der Folienblase beträgt vorzugsweise mindestens 100 Hz oder mindestens 500 Hz.

Die Schwingungsfrequenz und/oder die Schwingungsamplitude der Folienblase kann in mindestens einer Messebene an mindestens einem Umfangspunkt, insbesondere an mindestens zwei Umfangspunkten, der Folienblase gemessen werden. Um die Folienform besser erfassen zu können, können auch in mehrere Messebenen an einem oder mehreren Umfangspunkten gemessen werden.

Es ist möglich, den die Stabilität der Folienblase repräsentierenden Parameter in mehreren. z.B. horizontalen, Schnittebenen oder Bereichen der Folienblase zu ermitteln, die den Blasendurchmesserverlauf im Zeitverlauf repräsentieren.

Die Ermittlung des die Stabilität der Folienblase repräsentierenden Parameters kann noch dadurch verbessert werden, dass zusätzliche Messwerte hinzugezogen werden. Der zumindest eine die Stabilität der Folienblase repräsentierende Parameter kann durch das zusätzliche Erfassen von Messwerten zu einer Form und/oder einer Formänderung in einer Schlauchbildungszone in einem Bereich von der Ringdüse bis zur Einfriergrenze der Folienblase ermittelt wird, insbesondere durch das Erfassen von Messwerten zu einem Flattern, das heißt einer unkontrollierten, schnellen seitlichen (quer zur Produktionsrichtung) Bewegungen der Folienblase, einem Pumpen, das heißt einer periodische Änderung des Schlauchdurchmessers, bei der sich die Folienblase abwechselnd aufweitet und verengt, einem Rotieren, das heißt einem Taumeln der gesamten Folienblase um eine Längsachse der Blasfolienextrusionsanlage, einem Schaukeln, das heißt einem seitlichen Hin- und Herschwingen der Folienbase, einer Exzentrizität, das heißt eine seitlich zu einer Längsachse der Blasfolienanlage versetzte Anordnung der Mittelachse der Folienblase, einer Asymmetrie, das heißt einem unrunden Querschnitt der Folienblase, einer Ovalität, das heißt einem ovalen Querschnitt der Folienblase, und/oder einem zeitlichen Verlauf der Position einer Einfriergrenze der Folienblase.

Fener kann der zumindest eine die Stabilität repräsentierende Parameter durch das zusätzliche Erfassen von Messwerten zu einem zeitlichen Verlauf des Durchmessers der Folienblase im Bereich oder stromab einer Einfriergrenze der Folienblase, einem zeitlichen Verlauf der Breite der flachgelegten Folienblase stromab einer Flachlegeeinrichtung der Blasfolienextrusionsanlage und/oder einem Quer- und/oder Längs-Dickenprofils der Folienblase im Bereich oder stromab der Einfriergrenze ermittelt werden.

Darüber hinaus kann der zumindest eine die Stabilität repräsentierende Parameter durch das zusätzliche Erfassen von Messwerten aus einer IBC-Regelung (Internal Bubble Cooling Regelung) zu einem zeitlichen Verlauf des Durchmessers der Folienblase im Bereich oder stromauf einer Einfriergrenze der Folienblase ermittelt werden.

Es können auch Sensordaten und Messwerte innerhalb der Extrusionsanlage (z.B. Schmelzetemperatur) und/oder aus dem Umfeld der Extrusionsanlage (z.B. Umgebungstemperatur) und weitere Anlagenparametern der Extrusionsanlage (z.B. Rezeptur, Foliendicke, Folienbreite, Anlagenleistung, Bahngeschwindigkeit, Gebläsedrehzahlen, Kühlgastemperaturen, Drücke) herangezogen werden.

Der zumindest eine die Stabilität der Folienblase repräsentierende Parameter kann zudem durch eine Gewichtung, eine Filterung und/oder eine Glättung mindestens eines der Messwerte ermittelt werden.

In einer beispielhaften Ausgestaltung des Verfahrens wird die Güte des zumindest einen die Stabilität der Folienblase repräsentierenden Parameters über produktspezifische und/oder produktunspezifische Grenzwerte für die Stabilität der Folienblase und/oder für die zur Ermittlung des zumindest einen die Stabilität der Folienblase repräsentierenden Parameters herangezogenen Messwerte ermittelt.

Die Grenzwerte sowie die Ist-Werte der Güte, die Stabilität der Folienblase repräsentierenden Parameter sowie weitere Messwerte und Parameter sind vorzugsweise in einer Produktdatenbank gespeichert und können von dort geladen werden.

Es kann vorgesehen sein, dass der die Stabilität der Folienblase repräsentierende Parameter und/oder dessen Güte mittels einer Regelung oder Steuerung bzw. einer entsprechenden Einrichtung durch Verstellen zumindest einen Stellgröße des Kühlgasrings auf einen Sollwert oder einen Sollwertbereich geregelt bzw. gesteuert wird. Eine Steuerung kann als eine offene Wirkungskette betrachtet werden, bei der eine Eingangsgröße eine Ausgangsgröße beeinflusst, ohne dass das Ergebnis überprüft wird. Eine Regelung hingegen ist ein geschlossener Regelkreis, der eine Rückkopplung beinhaltet. Das bedeutet, dass der Ist-Zustand des Systems gemessen und mit dem Soll-Zustand verglichen wird. Bei Abweichungen werden Korrekturmaßnahmen eingeleitet, um den Soll-Zustand wiederherzustellen.

Selbstverständlich ist nicht ausgenommen, dass der die Stabilität der Folienblase repräsentierende Parameter und/oder dessen Güte dem Bedienpersonal angezeigt wird und Einstellungen der Stellgrößen manuell erfolgen.

Der die Stabilität der Folienblase repräsentierende Parameter und/oder dessen Güte können über ein Farb-Schema, beispielsweise ein Ampelsystem grün/gelb/rot, oder eine Zahlenskalierung, wie etwas Prozentangaben o.ä., zum Beispiel durch eine graphische Anzeige visualisiert werden.

Die Aufgabe wird ferner durch eine Blasfolienextrusionsanlage für die Herstellung eines Folienschlauchs gelöst, wobei die Blasfolienextrusionsanlage Folgendes umfassend:
- einen Blaskopf mit einer Ringdüse zum Extrudieren eines innendruckbeaufschlagten Folienschlauchs zu einer Folienblase aus einem thermoplastischen Kunststoff,
- eine Abzugseinheit zum Abziehen der Folienblase in einer Produktionsrichtung,
- einen die Folienblase mit Kühlgas anströmenden und die Folienblase umgebenden Kühlgasring zum Kühlen der Folienblase, und
- zumindest einen Sensor zum Erfassen einer Schwingungsfrequenz und/oder einer Schwingungsamplitude der Folienblase, wobei ein Messbereich des zumindest einen Sensors innerhalb eines vom Kühlgasring geführten Bereichs der Folienblase angeordnet ist.

Der Messbereich des zumindest einen Sensors zum Erfassen einer Schwingungsfrequenz und/oder einer Schwingungsamplitude der Folienblase kann insbesondere innerhalb des Erstreckungsbereiches des Kühlgasrings in Produktionsrichtung und insbesondere zusätzlich bis maximal 200 mm oder bis maximal 50 mm stromab des Kühlgasrings in Produktionsrichtung angeordnet sein.

Der zumindest eine Sensor kann am Kühlgasring befestigt oder in den Kühlgasring integriert sein. Hierbei kann der zumindest eine Sensor innerhalb eine Durchgangsöffnung zum Hindurchführen der Folienblase angeordnet sein.

Der zumindest eine Sensor kann starr an der Blasfolienextrusionsanlage oder beweglich angeordnet sein. Zum Beispiel kann der zumindest eine Sensor parallel zur Produktionsrichtung und/oder um die Folienblase herum verfahrbar sein. Der zumindest eine Sensor kann auch mit dem höhenverstellbar ausgebildeten Kühlgasring verfahrbar sein. Denkbar sind auch Winkelveränderungen des zumindest einen Sensors gegenüber der Oberfläche der Folienblase.

Ein bevorzugtes Ausführungsbeispiel wird im Folgenden anhand der Figuren näher erläutert. Hierin zeigen
- Figur 1: eine Seitenansicht einer Blasfolienextrusionsanlage, teilweise im Längsschnitt, mit einer ersten Ausführungsform eines Kühlgasrings,
- Figur 2: eine vergrößerte Teilansicht der Blasfolienextrusionsanlage gemäß Figur 1 mit einer zweiten Ausführungsform eines Kühlgasring, und
- Figur 3: eine vergrößerte Teilansicht der Blasfolienextrusionsanlage gemäß Figur 1 mit einer dritten Ausführungsform eines Kühlgasring.

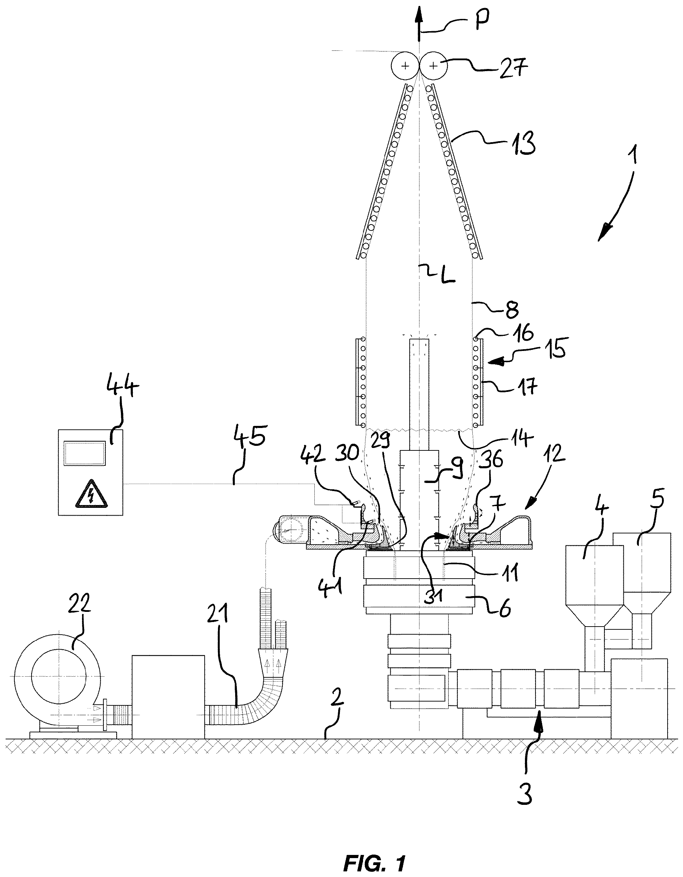

In Figur 1 ist in Seitenansicht, teilweise im Längsschnitt entlang einer Längsachse L eine Blasfolienextrusionsanlage 1 zur Herstellung eines Folienschlauchs gezeigt. Auf einem Maschinenfundament 2 steht ein Extruder 3, an dem zwei Aufgabetrichter 4, 5 für thermoplastisches Kunststoffmaterial zu erkennen sind. Ein in Granulatform über die Aufgabetrichter 4, 5 aufgegebenes thermoplastisches Material wird durch Druck und zusätzliche Heizmittel in einer Schnecke des Extruders 3 plastifiziert und homogenisiert und in einen sich an den Extruder 3 anschließenden Blaskopf 6 mit vertikaler Achse entlang der Längsachse L der Folienblasanlage 1 gedrückt. Der Blaskopf 6 hat eine zu seiner Oberseite 7 hin öffnende schematisch dargestellte Ringdüse 11, aus der eine sich erweiternder zur Längsachse L achssymmetrische Folienblase 8 aus zunächst noch plastifiziertem thermoplastischem Kunststoff austritt. Die Folienblase 8 wird nach Austritt aus der Ringdüse 11 mit Luft aufgeblasen und innen gekühlt, wozu ein Lufteinlass 9 dient, der innerhalb der Ringdüse 11 angeordnet ist und sich innerhalb der Folienblase 8 befindet. Somit wird die noch plastisch verformbare Folienblase 8 aufgeweitet. Nach Erstarrung des Kunststoffmaterials der Folienblase 8 im Bereich einer sogenannten Einfriergrenze 14 behält diese ihren Durchmesser im Wesentlichen bei. Die Folienblase 8 wird entlang der Längsachse L weiter nach oben in Produktionsrichtung P abgezogen und in einer Flachlegeeinheit 13 flachgedrückt und über ein Abziehwerk 27 nach oben weggeführt. Die flachgedrückte Folienblase 8 wird anschließend als Folienschlauch auf Coils aufgewickelt.

Auf dem Blaskopf 6 ist ein Kühlgasring 12 mit innen liegenden Kühlgasringdüsen 29, 30 und mit einer teilweise schematisch dargestellten Leitung 21 für Kühlgas angeordnet. Die Leitung 21 ist eingangsseitig mit einem Gebläse 22 verbunden, über das Kühlgas, in der Regel Luft, zum Kühlgasring 12 gefördert wird. Aus den Kühlgasringdüsen 29, 30 strömt das Kühlgas aus und strömt die Folienblase 8, die unter erhöhtem Innendruck steht und durch eine Durchgangsöffnung 31 geführt ist, ringförmig im Wesentlichen parallel zur Oberfläche der Folienblase 8 an. Die Austrittsöffnungen der beiden Kühlgasringdüsen 29, 30 sind in Produktionsrichtung P ausgerichtet. Die in diesem Bereich plastifizierte Folienblase 8 erweitert sich zunächst im Durchmesser unter dem genannten Überdruck im Inneren, bis sie unter der Wirkung des Kühlgases erstarrt und einen konstanten Durchmesser annimmt. Oberhalb der Einfriergrenze 14, d.h. in Produktionsrichtung P stromab von der Einfriergrenze 14, befindet sich eine Kalibriervorrichtung 15, die mehrere Kalibrierrollen 16 umfasst, die um die Längsachse L und um den Umfang der Folienblase 8 ringförmig angeordnet sind. Um eine Anpassung an Folienblasen 8 unterschiedlicher Durchmesser zu ermöglichen, sind die Kalibrierrollen 16 in etwa radial zur Längsachse L verstellbar an einem Tragrahmen 17 befestigt.

Die gesamte Innenkontur bzw. Durchgangsöffnung 31 des Kühlgasrings 12 erweitert sich in Abzugs- bzw. Produktionsrichtung P und erzeugt zusammen mit der Folienblase 8 einen Venturieffekt, d.h. eine Druckabsenkung auf die Kühlluft und damit einen Ansaug- und Aufweiteffekt auf die Folienblase 8. Diese Formgebung hat die Wirkung, dass sich die Folienblase 8 im Bereich des Kühlgasrings 12 im Durchmesser erweitert, da am Austritt des Kühlgasrings 12 ein Unterdruck entsteht, während gleichzeitig im Inneren der Folienblase 8 durch die zuvor genannte Innenkühlung ein Überdruck herrscht. Die Erweiterung der Folienblase 8 setzt sich fort, bis durch die Kühleffekte des Kühlgases der thermoplastische Kunststoff im Bereich der Einfriergrenze 14 erstarrt ist.

Der Ansaugeffekt bzw. Venturieffekt wird im gezeigten ersten Ausführungsbeispiel des Kühlgasrings 12 durch einen Venturiaufsatz 36 verstärkt, der in Produktionsrichtung P auf der stromab liegenden Seite des Kühlgasrings 12 angeordnet ist und Bestandteil desselben ist.

Am Kühlgasring 12 sind zwei Sensoren 41, 42, zum Beispiel Abstandssensoren zum Erfassen des Abstands zwischen dem jeweiligen Sensor 41, 42 und der Oberfläche der Folienblase 8, derart angeordnet, dass deren Messbereiche innerhalb eines vom Kühlgasring 12 geführten Bereichs der Folienblase 8 angeordnet sind. Der vom Kühlgasring 12 geführten Bereich kann als derjenige Bereich angesehen werden, in dem der Kühlgasring 12 einen Ansaugeffekt auf die Folienblase 8 hat, insbesondere innerhalb des Erstreckungsbereiches des Kühlgasrings 12 in Produktionsrichtung P betrachtet, und ggf. noch zusätzlich bis maximal 200 mm oder bis maximal 50 mm stromab des Kühlgasrings 12. Die Sensoren 41, 42 sind im gezeigten Ausführungsbeispiel am Venturiaufsatz 36 bzw. innerhalb desselben angeordnet. Sie können jedoch auch in den Kühlgasring 12, zum Beispiel in eine Wand des Kühlgasrings 12, integriert sein. Sie können jedoch auch außerhalb des Kühlgasrings 12 stromab vom Kühlgasring 12 angeordnet sein.

Die Sensoren 41, 42 sind über Steuerleitungen 45 mit einer Steuerungseinheit 44 verbunden, über die Stellgrößen, zum Beispiel des Kühlgasrings 12, gesteuert werden können.

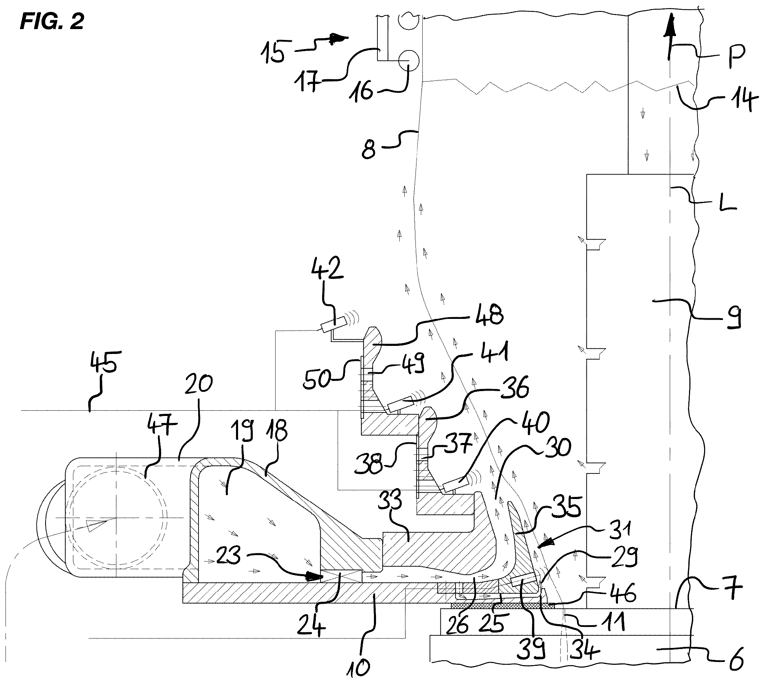

In Figur 2 zeigt die Blasfolienextrusionsanlage 1 gemäß Figur 1 in einem vergrößerten Ausschnitt im Bereich eines Kühlgasrings 12. Die Blasfolienextrusionsanlage 1 weist eine Kühlgasring 12 in einer zweiten Ausführungsform auf, die von der ersten Ausführungsform gemäß Figur 1 abweicht. Einzelheiten, die mit denen der Figur 1 übereinstimmen, sind mit denselben Bezugsziffern versehen und dort beschrieben.

Der Kühlgasring 12 liegt wie in Figur 1 direkt auf dem Blaskopf 6 auf, wobei zwischen dem Blaskopf 6 und dem Kühlgasring 12 eine Wärmeisolierscheibe 46 angeordnet ist.

Bis auf die Venturiaufsätze, im Ausführungsbeispiel gemäß Figur 2 sind zwei Venturiaufsätze 36, 48 vorgesehen, und der Anordnung von Sensoren sind die Kühlgasringe 12 gemäß Figur 1 und gemäß Figur 2 identisch aufgebaut.

Der Kühlgasring 12 ist mehrteilig aufgebaut. Er umfasst ein Ringgehäuse 18, das einen Ringraum 19 bildet, und einzelne tangential einlaufende Einlassstutzen 20, die mit einem rechteckigen Querschnitt in den Ringraum 19 übergehen und im Querschnitt runde Anschlussstutzen 47 bilden. Die Anschlussstutzen 47 sind über die Leitung 21 mit dem Gebläse 22 zum Zuführen von Kühlgas, hier Umgebungsluft, verbunden. Auf der Innenseite des Ringgehäuses 18 ist ein Austrittsringspalt 23 erkennbar, in dem radiale Leitstege 24 für eine Strömungsberuhigung des Kühlgases sorgen. Der Austrittsringspalt 23 teilt sich in einen ersten Ringkanal 25, der unten liegt, und einen zweiten darüber liegenden Ringkanal 26. Der erste Ringkanal 25 versorgt eine erste Kühlgasringdüse 29 und der zweite Ringkanal 26 eine zweite Kühlgasringdüse 30, die übereinander angeordnet sind. Die Austrittsöffnungen der beiden Kühlgasringdüsen 29, 30 sind in Produktionsrichtung P ausgerichtet.

Eine Grundplatte 10 bildet an einer inneren Seite eine feststehende Kühllippe 34 der ersten Kühlgasringdüse 29. Oben am Kühlgasring 12 ist ein oberer Verstelleinsatz 33 vorgesehen, mit dem durch Höhenveränderung gegenüber dem Ringgehäuse 18 die Spaltbreite der zweiten Kühlgasringdüsen 30 verstellt werden kann. Der obere Verstelleinsatz 33 bildet hierbei eine verstellbare Kühllippe der zweiten Kühlgasringdüsen 30, während ein an der Grundplatte 10 höhenverstellbarer Lippeneinsatz 35 eine Kühllippe der ersten bzw. zweiten Kühlgasringdüsen 29, 30 bildet. Der obere Verstelleinsatz 33 und der höhenverstellbare Lippeneinsatz 35 sind über hier nicht dargestellte Aktuatoren verstellbar.

Der Kühlgasring 12 umfasst ferner zwei in Produktionsrichtung P übereinander angeordnete und höhenverstellbare Venturiaufsätze 36, 48 jeweils mit einer oder mehreren Lochblenden 37, 49. Die Öffnungsquerschnitte der Lochblenden 37, 49 sind verstellbar, insbesondere mittels Abdeckbleche 38, 50. Zur Höhenverstellung des Venturiaufsatzes 36 bzw. zur Verstellung der Öffnungsquerschnitte können entsprechende Aktuatoren vorgesehen sein (nicht dargestellt).

Einer der Sensoren 39 ist in den Lippeneinsatz 35 des Kühlgasrings 12 integriert bzw. in diesen eingelassen. Zwei weitere Sensoren 40, 41 sind jeweils in einem der Venturiaufsätze 36, 48 angeordnet und ein Sensor 42 ist außen am obersten der beiden Venturiaufsätze 48 befestigt. Es können mehr oder weniger als die exemplarisch gezeigten Sensoren 39, 40, 41, 42 vorgesehen sein. Zum Beispiel können über den Umfang mehrere Sensoren, vorzugsweise in einer Messebene, angeordnet sein. Die Sensoren 39, 40, 41, 42 können auch verschiebbar bzw. verfahrbar oder schwenkbar sein.

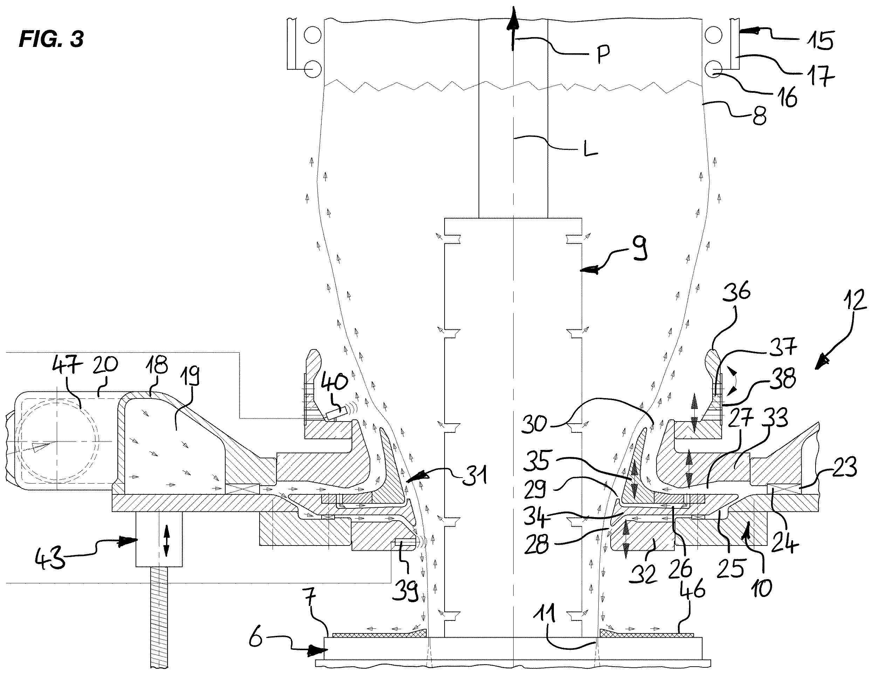

In Figur 3 zeigt die Blasfolienextrusionsanlage 1 gemäß Figur 1 in einem vergrößerten Ausschnitt im Bereich eines Kühlgasrings 12. Die Blasfolienextrusionsanlage 1 weist eine Kühlgasring 12 in einer dritten Ausführungsform auf, die von der ersten Ausführungsform gemäß Figur 1 abweicht. Einzelheiten, die mit denen der Figur 1 übereinstimmen, sind mit denselben Bezugsziffern versehen und dort beschrieben.

Im Unterschied zum Kühlgasring 12 gemäß der ersten Ausführungsform ist derjenige gemäß Figur 3 mit Abstand zum Blaskopf 6 über eine Abstandsverstelleinrichtung 43 mit dem Blaskopf 6 verbunden. Der Kühlgasring 12 liegt nicht auf dem Blaskopf 6 auf, auch wenn er in einer untersten Einstellung ggfs. bis zu einer solchen Position verstellt werden kann. Üblicherweise wird zwischen der Oberseite 7 des Blaskopfes 6 und der Unterseite des Kühlgasrings 12 ein Abstand vorhanden sein.

Der Kühlgasring 12 gemäß Figur 3 weist zudem eine Kühlgasringdüse mehr auf als die erste und die zweite Ausführungsform des Kühlgasrings.

Unten am Kühlgasring 12 ist ein ringförmiger unterer Verstelleinsatz 32 vorgesehen, der zusammen mit einer zentralen Kühllippe 34 des Ringgehäuses 18 eine untere Kühlgasringdüse 28 bildet. Die zentralen Kühllippe 34 ist hierbei feststehend ausgebildet, während der untere Verstelleinsatz 32 eine verstellbare Kühllippe der unteren Kühlgasringdüse 28 darstellt. Der Verstelleinsatz 32 ist über einen hier nicht dargestellten Aktuator gegenüber der Bodenplatte 10 des Kühlgasrings 12 verstellbar, so dass der Ringspalt der unteren Kühlgasringdüse 28 aktuatorisch veränderbar ist.

Oben am Kühlgasring 12 ist ein oberer Verstelleinsatz 33 vorgesehen, mit dem durch Höhenveränderung gegenüber dem Ringgehäuse 18 die Spaltbreite der zweiten oberen Kühlgasringdüsen 30 verstellt werden kann. Der obere Verstelleinsatz 33 bildet hierbei eine verstellbare Kühllippe der zweiten oberen Kühlgasringdüsen 30, während ein an der zentralen Kühllippe 34 höhenverstellbarer Lippeneinsatz 35 eine Kühllippe der ersten bzw. zweiten oberen Kühlgasringdüsen 29, 30 bildet. Der obere Verstelleinsatz 33 und der höhenverstellbare Lippeneinsatz 35 sind über hier nicht dargestellte Aktuatoren verstellbar.

Die untere Kühlgasringdüse 28 ist entgegen der Produktionsrichtung P ausgerichtet, wohingegen die beiden oberen Kühlgasringdüsen 29, 30 in Produktionsrichtung P ausgerichtet sind.

Der Kühlgasring 12 umfasst ferner einen höhenverstellbaren Venturiaufsatz 36 mit einer oder mehreren Lochblenden 37. Die Öffnungsquerschnitte der Lochblenden 37 sind verstellbar, insbesondere mittels eines Abdeckblechs 38. Zur Höhenverstellung des Venturiaufsatzes 36 bzw. zur Verstellung der Öffnungsquerschnitte können entsprechende Aktuatoren vorgesehen sein (nicht dargestellt).

Ein unterer Sensor 39 ist in den Verstelleinsatz 32 integriert bzw. in diesen eingelassen. Ein oberer Sensor 40 ist innerhalb des Venturiaufsatzes 36 angeordnet.

Grundsätzliche können verschiedenste aus dem Stand der Technik bekannte Ausführungsformen eines oder mehrerer Kühlgasringe verwendet werden. Die Sensoren können ebenfalls, je nach Anwendungsfall und Zweck, in beliebige Anzahl vorhanden sein, solange zumindest einer der Sensoren mit seinem Messbereich innerhalb des vom Kühlgasring geführten Bereichs der Folienblase angeordnet ist.

### Bezugszeichenliste

- 1: Blasfolienextrusionsanlage
- 2: Maschinenfundament
- 3: Extruder
- 4: Aufgabetrichter
- 5: Aufgabetrichter
- 6: Blaskopf
- 7: Oberseite
- 8: Folienblase
- 9: Lufteinlass
- 10: Bodenplatte
- 11: Ringdüse
- 12: Kühlgasring
- 13: Flachlegeeinheit
- 14: Einfriergrenze
- 15: Kalibriervorrichtung
- 16: Kalibrierrolle
- 17: Tragrahmen
- 18: Ringgehäuse
- 19: Ringraum
- 20: Einlassstutzen
- 21: Leitung
- 22: Gebläse
- 23: Austrittsringspalt
- 24: Leitsteg
- 25: erster Ringkanal
- 26: zweiter Ringkanal
- 27: Abziehwerk
- 28: untere Kühlgasringdüse
- 29: erste obere Kühlgasringdüse
- 30: zweiter obere Kühlgasringdüse
- 31: Durchgangsöffnung
- 32: unterer Verstelleinsatz
- 33: oberer Verstelleinsatz
- 34: Kühllippe
- 35: Lippeneinsatz
- 36: Venturiaufsatz
- 37: Lochblende
- 38: Abdeckblech
- 39: Sensor
- 40: Sensor
- 41: Sensor
- 42: Sensor
- 43: Abstandsverstelleinrichtung
- 44: Steuerungseinheit
- 45: Steuerleitungen
- 46: Wärmeisolierscheibe
- 47: Anschlussstutzen
- 48: Venturiaufsatz
- 49: Lochblende
- 50: Abdeckblech

- L: Längsachse
- P: Produktionsrichtung

## Patentansprüche

1. Verfahren zum Erfassen einer Stabilität einer Folienblase (8) bei der Herstellung eines Folienschlauchs mittels einer Blasfolienextrusionsanlage (1) mit den folgenden Verfahrensschritten:
- Extrudieren eines innendruckbeaufschlagten Folienschlauchs zu einer Folienblase (8) aus einem thermoplastischen Kunststoff mittels einer Ringdüse (11) eines Blaskopfes (6),
- Abziehen der Folienblase (8) in einer Produktionsrichtung (P), und
- Kühlen der Folienblase (8) mittels eines die Folienblase (8) mit Kühlgas anströmenden und die Folienblase (8) umgebenden Kühlgasrings (12),
**dadurch gekennzeichnet,**
**dass** zumindest ein die Stabilität der Folienblase (8) repräsentierender Parameter innerhalb eines vom Kühlgasring (12) geführten Bereichs der Folienblase (8) ermittelt wird,
wobei der zumindest eine die Stabilität der Folienblase (8) repräsentierende Parameter aus Messwerten einer Schwingungsfrequenz und/oder einer Schwingungsamplitude der Folienblase (8) ermittelt wird.

2. Verfahren nach Anspruch 1,
**dadurch gekennzeichnet,**
**dass** der zumindest eine die Stabilität der Folienblase (8) repräsentierende Parameter innerhalb des Erstreckungsbereiches des Kühlgasrings (12) in Produktionsrichtung (P) bis maximal 200 mm oder bis maximal 50 mm stromab des Kühlgasrings (12) in Produktionsrichtung (P) ermittelt wird.

3. Verfahren nach Anspruch 1 oder 2,
**dadurch gekennzeichnet,**
**dass** der die Stabilität der Folienblase (8) repräsentierende Parameter die Schwingungsfrequenz und/oder die Schwingungsamplitude der Folienblase (8) in einem Frequenzspektrum von über 1 Hz, über 5 Hz, über 10 Hz, 1 bis 50 Hz, 5 bis 50 Hz, 10 bis 50 Hz oder 10 bis 20 Hz ist.

4. Verfahren nach einem der Ansprüche 1 bis 3,
**dadurch gekennzeichnet,**
**dass** der zumindest eine die Stabilität der Folienblase (8) repräsentierende Parameter mittels mindestens eines Abstandssensors ermittelt wird, indem der zeitlich veränderliche Abstand zwischen dem Abstandssensor (39, 40, 41, 42) und der Folienblase (8) gemessen wird.

5. Verfahren nach Anspruch 4,
**dadurch gekennzeichnet,**
**dass** als Abstandssensor ein Laser-Triangulations-Sensor oder ein LiDAR-Sensor verwendet wird.

6. Verfahren nach einem der Ansprüche 1 bis 5,
**dadurch gekennzeichnet,**
**dass** die Schwingungsfrequenz und/oder die Schwingungsamplitude der Folienblase (8) mit einer Abtastrate von mindestens 100 Hz oder mindestens 500 Hz gemessen werden.

7. Verfahren nach einem der Ansprüche 1 bis 6,
**dadurch gekennzeichnet,**
**dass** die Schwingungsfrequenz und/oder die Schwingungsamplitude der Folienblase (8) in mindestens einer Messebene an mindestens einem Umfangspunkt, insbesondere an mindestens zwei Umfangspunkten, der Folienblase (8) gemessen werden.

8. Verfahren nach einem der Ansprüche 1 bis 7,
**dadurch gekennzeichnet,**
**dass** der zumindest eine die Stabilität der Folienblase (8) repräsentierende Parameter durch das zusätzliche Erfassen von Messwerten zu einer Form und/oder einer Formänderung der Folienblase (8) in einer Schlauchbildungszone in einem Bereich von der Ringdüse (11) bis zur Einfriergrenze (14) der Folienblase (8) ermittelt wird, insbesondere durch das Erfassen von Messwerten zu einem Flattern, einem Pumpen, einem Rotieren, einem Schaukeln, einer Exzentrizität, einer Asymmetrie, einer Ovalität und/oder einem zeitlichen Verlauf der Position einer Einfriergrenze (14) der Folienblase (8).

9. Verfahren nach einem der Ansprüche 1 bis 8,
**dadurch gekennzeichnet,**
**dass** der zumindest eine die Stabilität der Folienblase (8) repräsentierende Parameter durch das zusätzliche Erfassen von Messwerten zu einem zeitlichen Verlauf des Durchmessers der Folienblase (8) im Bereich oder stromab einer Einfriergrenze (14) der Folienblase (8), einem zeitlichen Verlauf der Breite der flachgelegten Folienblase (8) stromab einer Flachlegeeinrichtung der Blasfolienextrusionsanlage (1) und/oder einem Quer- und/oder Längs-Dickenprofils der Folienblase (8) im Bereich oder stromab der Einfriergrenze (14) ermittelt wird.

10. Verfahren nach einem der Ansprüche 1 bis 9,
**dadurch gekennzeichnet,**
**dass** der zumindest eine die Stabilität der Folienblase (8) repräsentierende Parameter durch eine Gewichtung, eine Filterung und/oder eine Glättung mindestens eines der Messwerte ermittelt wird.

11. Verfahren nach einem der Ansprüche 1 bis 10,
**dadurch gekennzeichnet,**
**dass** die Güte des zumindest einen die Stabilität der Folienblase (8) repräsentierenden Parameters über produktspezifische und/oder produktunspezifische Grenzwerte für die Stabilität der Folienblase (8) und/oder für die zur Ermittlung des zumindest einen die Stabilität der Folienblase (8) repräsentierenden Parameters herangezogenen Messwerte ermittelt wird.

12. Verfahren nach einem der Ansprüche 1 bis 11,
**dadurch gekennzeichnet,**
**dass** der die Stabilität der Folienblase (8) repräsentierende Parameter und/oder dessen Güte mittels einer Regel- oder Steuerungseinheit (44) durch Verstellen zumindest einen Stellgröße des Kühlgasrings (12) auf einen Sollwert oder einen Sollwertbereich geregelt oder gesteuert wird.

13. Blasfolienextrusionsanlage (1) für die Herstellung eines Folienschlauchs nach einem Verfahren nach einem der Ansprüche 1 bis 12 umfassend:
- einen Blaskopf (6) mit einer Ringdüse (11) zum Extrudieren eines innendruckbeaufschlagten Folienschlauchs zu einer Folienblase (8) aus einem thermoplastischen Kunststoff,
- eine Abzugseinheit zum Abziehen der Folienblase (8) in einer Produktionsrichtung (P), und
- einen die Folienblase (8) mit Kühlgas anströmenden und die Folienblase (8) umgebenden Kühlgasring (12) zum Kühlen der Folienblase (8),
**gekennzeichnet durch,**
zumindest einen Sensor (39, 40, 41, 42) zum Erfassen einer Schwingungsfrequenz und/oder einer Schwingungsamplitude der Folienblase (8), wobei ein Messbereich des zumindest einen Sensors (39, 40, 41, 42) innerhalb eines vom Kühlgasring (12) geführten Bereichs der Folienblase (8) angeordnet ist.

14. Blasfolienextrusionsanlage (1) nach Anspruch 13,
**dadurch gekennzeichnet,**
**dass** der Messbereich des zumindest einen Sensors (39, 40, 41, 42) zum Erfassen einer Schwingungsfrequenz und/oder einer Schwingungsamplitude der Folienblase (8) innerhalb des Erstreckungsbereiches des Kühlgasrings (12) in Produktionsrichtung (P) bis maximal 200 mm oder bis maximal 50 mm stromab des Kühlgasrings (12) in Produktionsrichtung (P) angeordnet ist.

15. Blasfolienextrusionsanlage (1) nach Anspruch 13 oder 14,
**dadurch gekennzeichnet,**
**dass** der zumindest eine Sensor (39, 40, 41, 42) am Kühlgasring (12) befestigt oder in den Kühlgasring (12) integriert ist.

16. Blasfolienextrusionsanlage (1) nach einem der Ansprüche 13 bis 15,
**dadurch gekennzeichnet,**
**dass** der zumindest eine Sensor (39, 40, 41, 42) innerhalb einer Durchgangsöffnung zum Hindurchführen der Folienblase (8) angeordnet ist.

17. Blasfolienextrusionsanlage (1) nach einem der Ansprüche 13 bis 16,
**dadurch gekennzeichnet,**
**dass** der Sensor (39, 40, 41, 42) ein Laser-Triangulations-Abstandssensor oder ein LiDAR-Abstandssensor ist.
